# EUROPÄISCHE PATENTSCHRIFT

(11) **EP 1 458 995 B1**
(45) Veröffentlichungstag und Bekanntmachung des Hinweises auf die Patenterteilung: **27.09.2006**
(21) Anmeldenummer: 02796475.8
(22) Anmeldetag: 18.12.2002
(51) Int. Cl.: F16H 63/30, B60K 17/346

(54) **SCHALTVORRICHTUNG FÜR EIN GETRIEBE UND VERTEILERGETRIEBE EINES KRAFTFAHRZEUGES MIT EINER SOLCHEN**
SHIFT DEVICE FOR A TRANSMISSION AND POWER DIVIDER OF A MOTOR VEHICLE COMPRISING SUCH A SHIFT DEVICE
DISPOSITIF D'ACCOUPLEMENT DE BOITE DE VITESSE ET BOITE DE TRANSFERT DOTEE D'UN TEL DISPOSITIF SUR UN VEHICULE

(30) Priorität: 21.12.2001 AT 9742001
(43) Veröffentlichungstag der Anmeldung: 22.09.2004
(73) Patentinhaber: Magna Steyr Powertrain AG & CO KG, 8041 Graz (AT)
(72) Erfinder: RIEGLER, Ernst, A-8020 Graz (AT); KASSLER, Helmut, A-8570 Voitsberg (AT)
(74) Vertreter: Manitz, Finsterwald & Partner GbR
(86) Internationale Anmeldenummer: PCT/AT2002/000355
(87) Internationale Veröffentlichungsnummer: WO 2003/054426

(56) Entgegenhaltungen:
- EP-A- 0 149 020
- EP-A- 0 418 107
- WO-A-01/59331
- FR-A- 1 119 212
- US-A- 4 449 418

## Beschreibung

Die Erfindung betrifft eine Schaltvorrichtung für ein Getriebe, bestehend aus einer in Richtung der Achse einer Getriebewelle verschiebbaren Schaltmuffe zur treibenden Verbindung von Getriebegliedern, einer in die Schaltmuffe eingreifenden Schaltgabel und einem auf einer quer zur Getriebewelle angeordneten Schaltwelle drehbaren und mit einem Fußteil der Schaltgabel zusammenwirkenden Element als Aktuator.

Aus der gattungsbildenden WO 01/59331-A ist es bekannt, als Aktuator ein Ritzel zu nehmen, das mit einer entsprechenden Verzahnung am Fußteil der Schaltgabel kämmt und wobei die Schaltwelle von einem elektrischen Getriebemotor angetrieben ist.

Das hat einige Nachteile: die Übersetzung dieser Bewegungsübertragung ist konstant, was in der Regel nicht dem für das Schalten gewünschten Verlauf und der Charakteristik des Elektromotors entspricht; insbesondere nicht, wenn die Schaltmuffe eine Synchronisierung aufweist. Es gibt keine Anschläge und die Verzahnung hat keine Sperrwirkung, das heisst, sie kann die Schaltmuffe nicht in der jeweiligen Stellung festhalten. Beides hat aber bei elektromotorischem Antrieb besondere Bedeutung. Der Motor soll ja nach vollendeter Umschaltung stromlos bleiben und in bestimmten Anwendungsfällen sogar abgekuppelt werden können, auch wenn die Umschaltung gegen die immer wirkende Kraft einer Feder stattfand. Weiters soll der Motor zur Vereinfachung der Steuerung gegen einen Anschlag fahren können, um ohne Positions- oder Geschwindigkeitssensoren auszukommen.

Um hier Abhilfe zu schaffen, ist es Gegenstand der WO 01/59331-A, eine mit dem drehenden Element fest verbundene Arretierscheibe und ein in eine Arretierausnehmung eingreifendes Arretierglied vorzusehen. Dieses hält das drehende Element nach dem Auskuppeln des Elektromotors und sorgt dafür, dass das nur nach Erreichen einer bestimmten Endstellung möglich ist. Diese Abhilfe ist aber sehr aufwendig und ist auch funktionell nicht ganz befriedigend. Durch die auf das Element und damit auf die Arretierscheibe wirkenden Momente (ausgehend etwa von der Synchronisierung oder von Anphasungen der Zähne, um die Muffe gegen einen Anschlag festzulegen) entsteht Reibung, die das Umschalten be- beziehungsweise ganz verhindert. Dasselbe kann auch bei einer ungünstigen relativen Stellung der beiden zu kuppelnden Elemente vorkommen. Der jeweils andere Gang kann dann nicht eingerückt werden und die Muffe bleibt in Neutralstellung stecken, was zu gefährlichen Fahrsituationen führen kann und daher nicht passieren darf. Ausserdem ist die Positionierung durch die lange Toleranzkette ungenau.

Es ist daher Ziel der Erfindung, eine einfache und zuverlässige Steuerung vorzuschlagen, die allen funktionellen Anforderungen, insbesondere Sicherheitsanforderungen genügt. Erfindungsgemäß wird das mit den folgenden Maßnahmen erreicht:
a) das drehbare Element ist ein Nocken, der zwei von einem minimalen zu einem maximalen Radius reichende Flanken und eine Abflachung am maximalen Radius hat,
b) am Fuß der Schaltgabel sind zwei mit dem Nocken zusammenwirkende Triebstöcke in einem festen Abstand voneinander vorgesehen,
c) sodass der eine Triebstock an der einen und der andere Triebstock an der anderen Flanke anliegt und in mindestens einer Extremstellung der eine Triebstock an der Abflachung und der andere Triebstock gerade am minimalen Radius anliegt.

Das Zusammenwirken des Nockens des einen Gliedes mit den beiden Triebstöcken des anderen Gliedes, wobei beide Glieder definierte Pole haben (einer kann unendlich fern sein), gibt eine desmodromische Steuerung. Dabei bildet sich die Abflachung. Dabei bewirkt der eine Triebstock zusammen mit der Abflachung eine Arretierung der Schaltgabel in einer Extremstellung und der andere Triebstock am kleinsten Radius einen Anschlag. Somit sind zwei Funktionen, die nach dem Stand der Technik nur mit zwei verschiedenen Gliederpaaren erfüllt werden konnten, in einem einzigen Gliederpaar vereint, und das so, dass auch gegen erhebliche Haltekräfte geschaltet werden kann. Der unter der Kraft der Kupplungsfeder auf die Abflachung des Nockens drückende Triebstock übt ja kein Drehmoment auf den Nocken aus. Darüber hinaus kann durch Gestaltung der Nockenform die Übersetzung den Erfordernissen der Schaltung angepasst werden (zum Unterschied von einer üblichen Triebstockverzahnung, bei der die Übersetzung ja konstant sein muss).

In einer bevorzugten Ausführungsform ist die Schaltgabel ein um eine gehäusefeste Achse schwenkbarer zweiarmiger Hebel und die Triebstöcke Zylinder, deren Achsen parallel zur Achse der Schaltwelle sind (Anspruch 2). Das ergibt präzise kinematische Führung beider Glieder bei geringer Reibung; letzteres in besonders hohem Maße, wenn die Triebstöcke um ihre Achsen drehbar sind. Weiters sind die Flanken des Nockens Hüllkurven der Triebstöcke bei gemeinsamer Abwälzbewegung von Nocken und Triebstöcken (Anspruch 3). Dabei kann das Übersetzungsverhältnis der Abwälzbewegung durch Gestaltung der einen Flanke des Nockens bestimmt werden, die der anderen Flanke ergibt sich dann daraus.

In einer vorteilhaften Weiterbildung mit von einem Elektromotor angetriebener Schaltwelle ist an mindestens einer Flanke an der Stelle minimalen Radius eine Schulter vorgesehen (Anspruch 4). Damit kann der Elektromotor ohne Weg- oder Geschwindigkeitsregelung selbsttätig gesteuert werden.

Um ein zuverlässiges Schalten sicherzustellen, können mit Vorteil weitere Maßnahmen getroffen werden: Wenn die Schaltgabel eine Schaltmuffe mit großem Durchmesser umgreift, ist der Fußteil der Schaltgabel an deren tiefstem Punkt angesetzt (Anspruch 5), dadurch wird die Schaltkraft symmetrisch in die Schaltgabel eingetragen. Wenn die Gefahr besteht, dass die Schaltmuffe bei einer Zahn-auf-Zahn Stellung nicht eingerückt werden kann, enthält die Schaltgabel ein elastisches Element, sodass der Fussteil zurückweichen kann. Die Schaltung erfolgt dann, wenn die Zahnstellung günstig ist, etwas später durch die Kraft des elastischen Elementes.

Die Erfindung handelt auch und insbesondere vom Verteilergetriebe für Kraftfahrzeuge mit einer Geländegangstufe, die durch axiales Verschieben eines ihrer Elemente mittels einer Schaltgabel durch Rotation einer quer zur Achsrichtung angeordneten Schaltwelle schaltbar ist. Bei einem Verteilergetriebe treten die eingangs angesprochenen Probleme in besonders störender Weise auf. Behoben werden sie erfindungsgemäß mittels der kennzeichnenden Merkmale des ersten Anspruches und der der folgenden Ansprüche.

Im folgenden wird die Erfindung anhand von Abbildungen beschrieben und erläutert. Es stellen dar:
- Fig. 1:: Vertikalschnitt durch ein Verteilergetriebe mit der erfindungsgemäßen Schaltvorrichtung,
- Fig. 2:: Schnitt nach CC in Fig. 1,
- Fig. 3:: Detail der Fig. 2, vergrößert und variiert,
- Fig. 4:: Ansicht nach IV in Fig. 3,
- Fig. 5:: wie Fig. 4, in einer Extremstellung,
- Fig. 6:: wie Fig. 4, in der anderen Extremstellung,
- Fig. 7:: eine andere Ausführungsform in Ansicht, analog der Fig. 4.

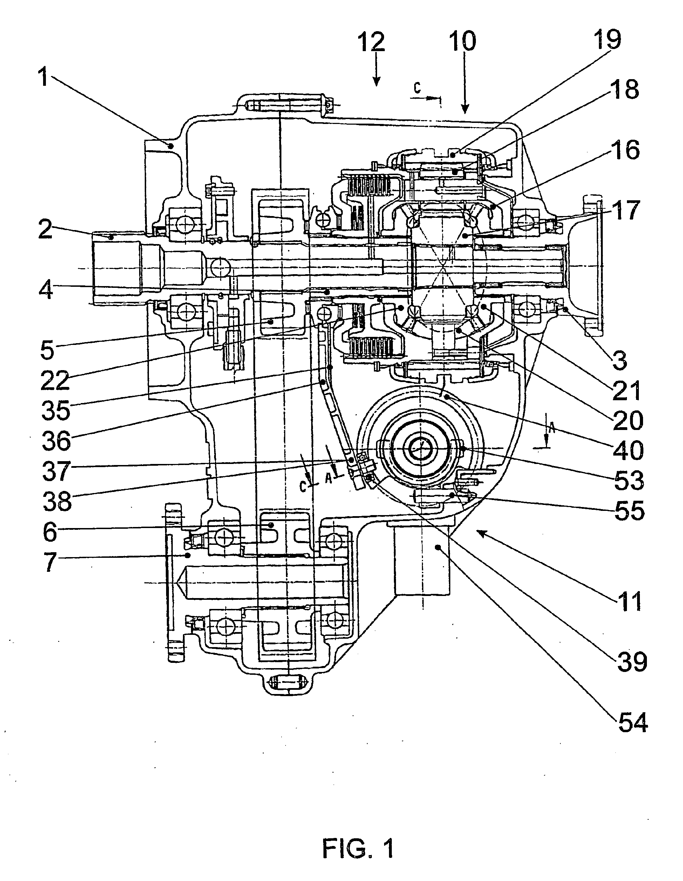

In **Fig. 1** ist das Gehäuse eines Verteilergetriebes insgesamt mit 1 bezeichnet, eine von der nicht dargestellten Antriebseinheit des Fahrzeuges kommende Eingangswelle mit 2, eine mit der Hinterachse antriebsverbundene erste Ausgangswelle mit 3 und eine mit der ebenfalls nicht dargestellten Vorderachse antriebsverbundene zweite Ausgangswelle mit 4. Die zweite Ausgangswelle 4 treibt mittels eines ersten Zahnriemenrades 5 ein zweites Zahnriemenrad 6 unter der Eingangswelle 2, welches auf einer Abtriebswelle 7 für den Antrieb der Vorderachse sitzt.

Zur Verteilung des Drehmomentes auf die beiden Ausgangswellen 3,4 ist ein summarisch mit 10 bezeichnetes Differentialgetriebe vorgesehen. Weiters ist eine Steuereinheit 11 unter dem Differentialgetriebe 10 und eine Sperrkupplung 12 zum Sperren des Differentialgetriebes 10 vorgesehen. In dem gezeigten Ausführungsbeispiel ist die Sperrkupplung baulich mit dem Differentialgetriebe 10 vereint. Sie könnte aber auch getrennt, ja sogar irgendwo anders im Verteilergetriebe bzw. im Antriebszug angeordnet sein. Auch das Differentialgetriebe selbst kann im Rahmen der Erfindung sehr verschieden ausgebildet sein.

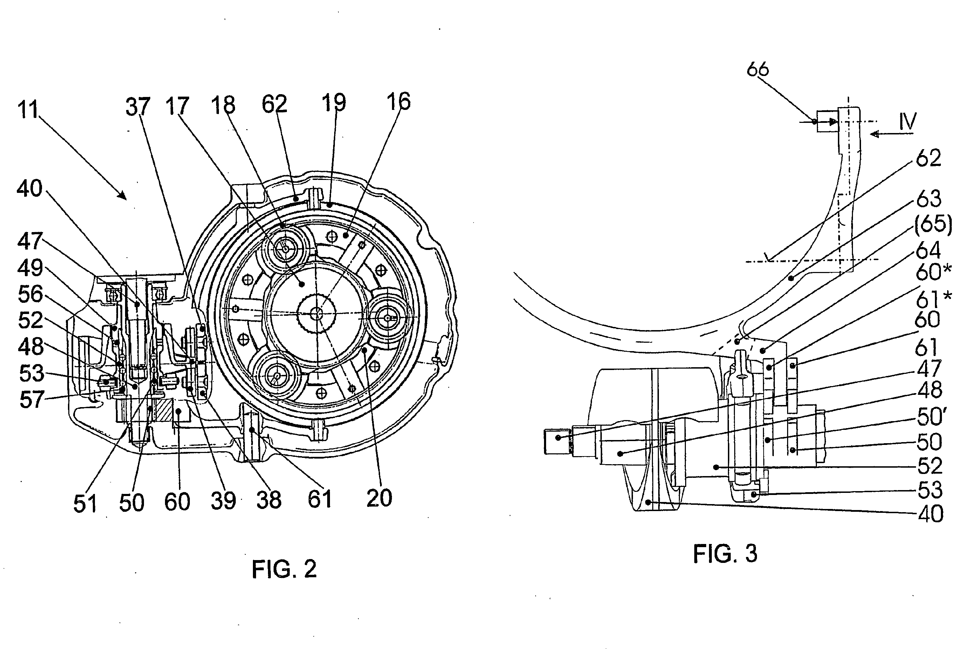

In den **Fig. 1** und **Fig. 2** ist eine beispielsweise und besondere Ausführung des Verteilergetriebes gezeigt. Im Inneren eines Differentialgehäuses 16, das hier gleichzeitig als Planetenträger dient, befindet sich ein drehfest mit der Eingangswelle 2 verbundenes Sonnenrad 17, im Differentialgehäuse 16 drehbar gelagerte Planetenräder 18 der Geländegangstufe sowie erste Ausgleichsräder 21 und zweite Ausgleichsräder 22. Erstere (21) sind mit der ersten Ausgangswelle 3 und zweitere (22) sind mit der zweiten Ausgangswelle 4 drehfest verbunden. Das Differentialgehäuse 16 ist von einem Hohlrad 19 umgeben, das achsial verschiebbar und im Geländegang mit dem Differentialgehäuse 16 drehfest verbunden ist. Diese besondere Ausführungsform des Differentialgetriebes 10 ist Gegenstand des österreichischen Patentes 405 157 und dort in Bau- und Funktionsweise ausführlicher beschrieben.

Die Sperrkupplung 12 wird mittels zweier gegeneinander verdrehbarer Rampenringe 31,32 betätigt. Der erste Ring 31 besitzt einen ersten Rampenhebel 35, der zweite Ring 32 einen zweiten (36), die nach unten ragen und an ihren freien Enden 37,38 Rollen 39 besitzen. Zwischen den beiden Rollen 39 befindet sich eine drehbare Steuerscheibe 40. Bei Verdrehen dieser Steuerscheibe werden die Rollen 39 auseinanderbewegt und über die scherenartig bewegten Rampenhebel 35,36 die Ringe 31,32 gegeneinander verdreht.

In **Fig. 2** ist 47 eine Motorausgangswelle eines nicht dargestellten elektrischen Getriebemotors, die sich bei laufendem Motor entsprechend untersetzt dreht. Mit dieser ist drehfest eine hülsenartig auf diese aufgesteckte Trägerwelle 48 verbunden, die beiderseits im Gehäuse 1 gelagert ist. Auf der Trägerwelle 48 ist die Nabe 49 der Steuerscheibe 40 und ein Nocken 50 drehbar gelagert. Zwischen der Nabe 49 und dem Nocken 50 ist auf der Trägerwelle 48 mittels einer Kugellängsführung 51 eine Umschaltmuffe 52 drehfest aber in Längsrichtung verschiebbar angebracht. Die Umschaltmuffe 52 wird mittels einer Umschaltgabel 53 verschoben, welche von einem Umschaltmagneten 54 (Fig.1) über einen in einer Umschaltgabelachse 55 (Fig.l) gelagerten Hebel betätigt wird. Die Umschaltmuffe 52 hat an ihren beiden Achsialenden erste Schaltzähne 56 zur drehfesten Verbindung mit der Nabe 49 und zweite Schaltzähne 57 zur drehfesten Verbindung mit dem Nocken 50. Die Schaltzähne 56,57 sind Kuppelzähne mit abdrängendem Eingriffswinkel. Wenn nur eine Gangschaltung oder nur eine Sperrkupplung zu betätigen ist, ist keine Umschaltmuffe 52 erforderlich.

In **Fig. 3** ist genauer zu erkennen, dass der Nocken 50 in noch zu beschreibender Weise mit Triebstöcken 60,61 zusammenwirkt, die am Fußteil 64 einer um eine Schwingachse 62 im Gehäuse schwenkbaren Schaltgabel 63 angeordnet sind, mittels derer das Hohlrad 19 zur Umschaltung in den Geländegang in axialer Richtung verschoben wird. Dazu ist beiderseits des Hohlrades je ein Gleitstein 66 vorgesehen. Im Fußteil 64 kann eine elastisch nachgiebige Zwischenzone 65 vorgesehen sein.

Im gezeigten Ausführungsbeispiel ist der Nocken 50 und sind die Triebstöcke 60,61 aus Gründen der Seitenführung verdoppelt (Nocken 50* und Triebstöcke 60*,61*) und ist der Fußteil 64 der Schaltgabel 63 an deren tiefstem Punkt, somit in ihrer Symmetrieachse, angebunden. Durch letzteres sind die Verformungen der beiden Hälften der Schaltgabel 62 gleich, sodass sie sich nicht verklemmen kann.

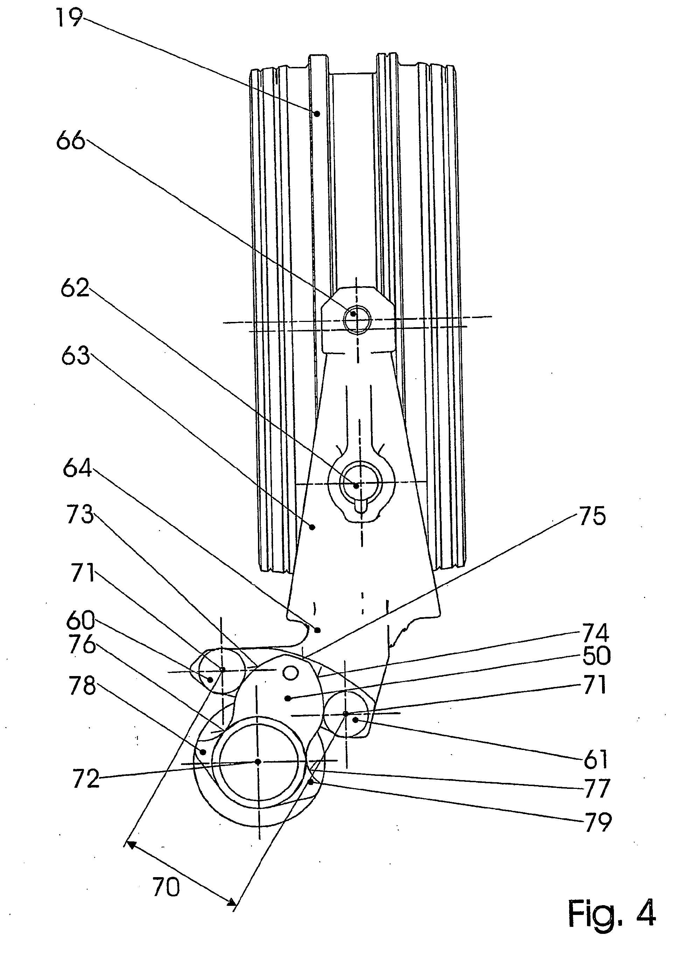

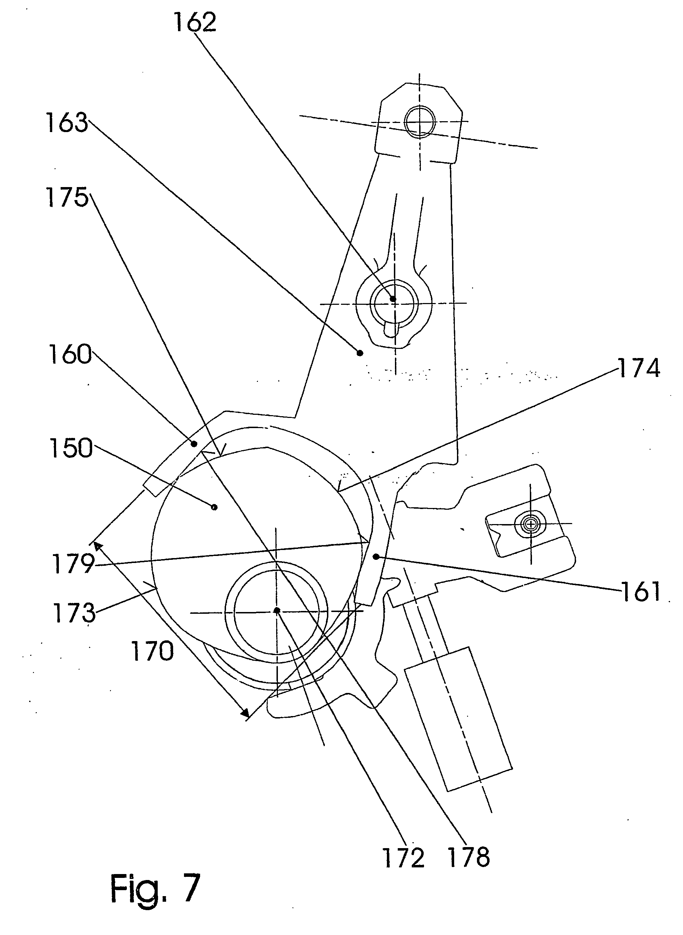

In **Fig. 4** ist die Kinematik des Zusammenwirkens von Nocken und Triebstöcken 60,61 zu sehen. Die Triebstöcke 60,61 sind in einem festen Abstand 70 voneinander am Fussteil 64 der Schaltgabel 63 angeordnet. Sie sind hier Kreiszylinder (auch andere Formen sind denkbar, siehe Fig. 7) mit Achsen 71, die entweder nur geometrische Achsen sind oder Drehachsen für die Triebstöcke, auf denen sie rotieren und so auf den Nocken 50 abrollen können, um die Reibung zu minimieren. Der Nocken ist mit seiner Welle um eine Achse 72 drehbar und besitzt eine erste Flanke 73, eine zweite Flanke 74, im maximalen Abstand von der Achse 72 eine Abflachung 75 und in minimalem Abstand von der Achse 72, das heisst bei minimalem Radius, Täler 76,77, an die Schultern 78,79 anschließen. Die Flanken 73,74 sind so geformt, dass in allen mittleren Stellungen, wie etwa in Fig. 4, immer der Triebstock 60 an der Flanke 73 und der Triebstock 61 an der Flanke 74 anliegt. Diese Flanken sind somit Hüllkurven der beiden Triebstöcke. Zum Unterschied von einer Verzahnung sind durch geeignete Formgebung der Flanken 73,74 winkelabhängig verschiedene Übersetzungen realisierbar. In Fig. 4 ist auch unmittelbar ersichtlich, wie etwa eine Drehung des Nockens 50 um seine Achse 72 im Uhrzeigersinn ein Schwenken der Schaltgabel 63 um ihre Schwingachse 62 entgegen dem Uhrzeigersinn bewirkt.

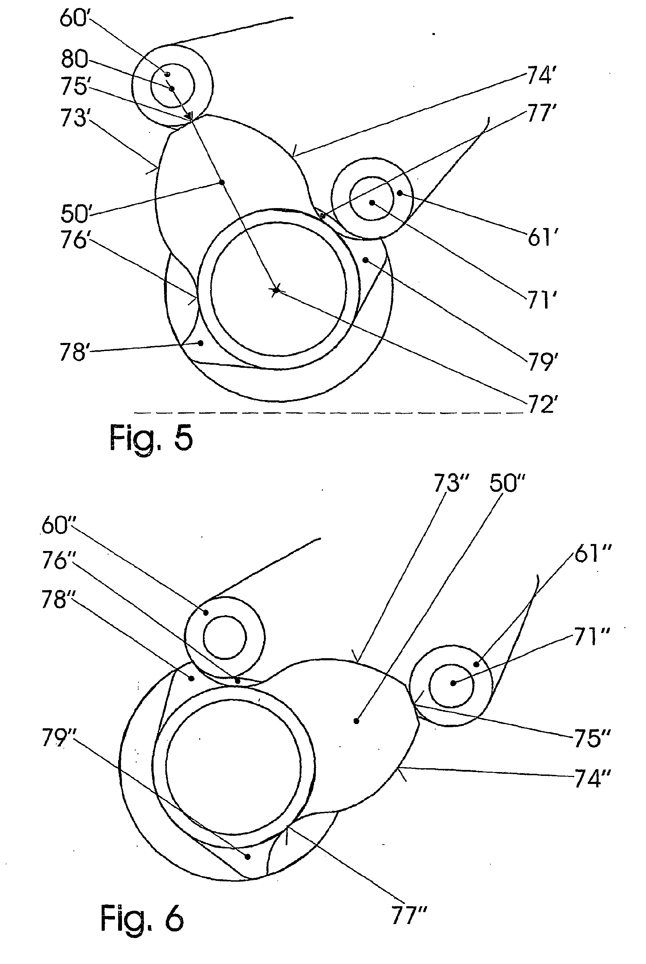

In **Fig. 5** findet sich der Nocken 50' in der einen Endstellung. Der Triebstock 61' hat das Tal 77' durchlaufen und den Anschlag 79' erreicht. Dadurch wurde der den Nocken antreibende Elektromotor stillgesetzt und umgesteuert, sodass er sich beim wieder Einschalten in die entgegengesetzte Richtung dreht. Der andere Triebstock 60' stützt sich in dieser Stellung auf der Abflachung 75' ab. Da die durch einen Pfeil 80 dargestellte Abstützkraft auf die Achse 72' des Nockens 50' gerichtet ist, wird dabei auf den Nocken 50' kein Drehmoment ausgeübt. Somit kann die Schaltgabel ohne Beaufschlagung des Motors und ohne Verriegelung in der gezeigten Stellung gehalten werden. Zur Sicherheit ist gegebenenfalls eine nicht dargestellte Feder vorgesehen, bzw. wirkt eine sowieso vorhandene Kupplungsfeder als solche. Die andere Extremstellung der Fig. 6 unterscheidet sich von der der Fig. 5 nur dadurch, dass die Triebstöcke 60",61" ihre Rollen getauscht haben, und dass der Nocken 50" ungefähr um einen rechten Winkel im Uhrzeigersinn verdreht ist. Hier wird die Schaltgabel in der anderen Extremstellung festgehalten.

Weiter oben wurde die Möglichkeit erwähnt, im Fussteil 64 der Schaltgabel 63 eine elastische Zone 65 vorzusehen. Wenn das Hohlrad bei Zahn-auf Zahnstellung nicht eingerückt werden kann, so gestattet es die elastische Zone dem Nocken 50, seine Stellbewegung bis zur Endstellung auszufüluen, ohne dass sich dabei aber die Gabel selbst bewegen würde. Erst wenn die Zähne des Hohlrades sich gegenüber ihrem Gegenrad etwa verschoben haben, wird das Hohlrad durch die in der elastischen Zone gespeicherte Kraft eingerückt.

In der Variante der Fig. 7 ist der Nocken 150 sehr stark erweitert und verdickt. Er wirkt kinematisch mit den Triebstöcken 160,161 zusammen, die hier nicht zylindrisch, sondern stabförmig und mit geeignet geformten Gleitflächen 178,179 versehen sind. Auch hier herrscht zwischen den beiden Gliedern eine desmodromische Bewegungsübertragung, in der die beiden Kontaktflächen 178,179 immer mit dem Nocken 150 in Kontakt sind.

## Patentansprüche

1. Schaltvorrichtung für ein Getriebe, bestehend aus einer in Richtung einer Getriebewelle verschiebbaren Schaltmuffe (19) zur treibenden Verbindung von Getriebegliedern, einer in die Schaltmuffe eingreifenden Schaltgabel (63) und einem auf einer quer zur Getriebewelle angeordneten Welle (48) drehbaren und mit einem Fußteil (64) der Schaltgabel zusammenwirkenden Element als Aktuator, **dadurch gekennzeichnet, dass**
a) das drehbare Element ein Nocken (50, 50'; 150) ist, der zwei von einem minimalen zu einem maximalen Radius reichende Flanken (73,74; 173,174) und eine Abflachung (75; 175) am maximalen Radius hat,
b) am Fußteil (64) der Schaltgabel (63) zwei mit dem Nocken (50; 150) zusammenwirkende Triebstöcke (60,61; 160,161) in einem festen Abstand (70; 170) voneinander vorgesehen sind,
c) sodass der eine Triebstock (60; 160) an der einen Flanke (73; 173) und der andere Triebstock (61; 161) an der anderen Flanke (74; 174) anliegt und in mindestens einer Extremstellung ein Triebstock (60,61; 160,161) an der Abflachung (75; 175) anliegt.

2. Schaltvorrichtung nach Anspruch 1, **dadurch gekennzeichnet, dass** die Schaltgabel (63) ein um eine gehäusefeste Achse (62) schwenkbarer zweiarmiger Hebel ist und die Triebstöcke (60,61) Kreiszylinder, deren Achsen (71) parallel zur Achse (72) der Schaltwelle sind.

3. Schaltvorrichtung nach Anspruch 2, **dadurch gekennzeichnet, dass** die Flanken (73,74; 173,174) des Nockens (50; 150) Hüllkurven der Triebstöcke (60,61; 160,161) bei der Abwälzbewegung von Nocken und Triebstöcken sind.

4. Schaltvorrichtung nach Anspruch 1, wobei die Schaltwelle von einem Elektromotor angetrieben ist, **dadurch gekennzeichnet, dass** an mindestens eine Flanke (73,74; 173,174) an die Stelle minimalen Radius eine Schulter (78,79) anschließt.

5. Schaltvorrichtung nach Anspruch 1, **dadurch gekennzeichnet, dass** der Fußteil (64) der Schaltgabel (63) an deren tiefstem Punkt angesetzt ist.

6. Schaltvorrichtung nach Anspruch 1, **dadurch gekennzeichnet, dass** die Schaltgabel (63) ein elastisches Element (65) enthält, sodass der Fussteil (64) zurückweichen kann.

7. Verteilergetriebe für Kraftfahrzeuge mit einer Geländegangstufe, die durch axiales Verschieben eines ihrer Elemente (19) mittels einer Schaltgabel (63) durch Rotation einer quer zur Achsrichtung angeordneten Welle (48) schaltbar ist, **dadurch gekennzeichnet, dass**
a) auf der Welle (48) ein Nocken (50; 150) befestigt ist, der zwei von einem minimalen zu einem maximalen Radius reichende Flanken (73,74; 173,174) und eine Abflachung (75; 175) am maximalen Radius hat,
b) die Schaltgabel (63) einen Fußteil (64) hat, auf dem zwei mit dem Nocken (50; 150) zusammenwirkende Triebstöcke in einem festen Abstand (70; 170) voneinander angeordnet sind,
c) sodass der eine Triebstock (60; 160) an der einen Flanke (73; 173) und der andere Triebstock (61; 161) an der anderen Flanke (74; 174) anliegt und in mindestens einer Extremstellung ein Triebstock (60,61; 160,161) an der Abflachung (75; 175) anliegt.

8. Verteilergetriebe nach Anspruch 7, **dadurch gekennzeichnet, dass** die Schaltgabel (63) ein um eine gehäusefeste Achse (62) schwenkbarer zweiarmiger Hebel ist und die Triebstöcke (60,61) Kreiszylinder, deren Achsen (71) parallel zur Achse (72) der Welle (48) sind.

9. Verteilergetriebe nach Anspruch 8, **dadurch gekennzeichnet, dass** die Flanken (73,74; 173,174) des Nockens (50; 150) Hüllkurven der Triebstöcke (60,61; 160,161) bei gemeinsamer Abwälzbewegung von Nocken und Triebstöcken sind.

10. Verteilergetriebe nach Anspruch 7, wobei die Schaltwelle von einem Elektromotor angetrieben ist, **dadurch gekennzeichnet, dass** an mindestens eine Flanke (73,74; 173,174) an die Stelle minimalen Radius eine Schulter (78,79) vorgesehen ist.

11. Verteilergetriebe nach Anspruch 7, **dadurch gekennzeichnet, dass** der Fußteil (64) der Schaltgabel (63) an deren tiefstem Punkt angesetzt ist.

12. Verteilergetriebe nach Anspruch 7, **dadurch gekennzeichnet, dass** die Schaltgabel (63) ein elastisches Element (65) enthält, sodass der Fussteil (64) zurückweichen kann.

## Claims

1. A shift device for a transmission, consisting of a shift sleeve (19) displaceable in the direction of a transmission shaft for the driving connection of transmission members; a shift fork (63) engaging into the shift sleeve; and an element as an actuator which is rotatable on a shaft (48) arranged transversely to the transmission shaft and which cooperates with a foot part (64) of the shift fork, **characterized in that**
a) the rotatable element is a cam (50, 50'; 150) which has two flanks (73, 74; 173, 174) extending from a minimum to a maximum radius and a flattened portion (75; 175) at the maximum radius;
b) two lantern wheels (60, 61; 160, 161) cooperating with the cam (50; 150) at a fixed distance (70; 170) from one another are provided on the foot part (64) of the shift fork (63);
c) so that the one lantern wheel (60; 160) contacts the one flank (73; 173) and the other lantern wheel (61; 161) contacts the other flank (74; 174) and, in at least one extreme position, one lantern wheel (60, 61; 160, 161) contacts the flattened portion (75; 175).

2. A shift device in accordance with claim 1, **characterized in that** the shift fork (63) is a two-armed lever pivotable about an axis (62) fixed with respect to the housing, and the lantern wheels (60, 61) are circular cylinders whose axes (71) are parallel to the axis (72) of the shift shaft.

3. A shift device in accordance with claim 2, **characterized in that** the flanks (73, 74; 173, 174) of the cam (50; 150) are envelope curves of the lantern wheels (60, 61; 160, 161) on the rolling movement of the cam and lantern wheels.

4. A shift device in accordance with claim 1, wherein the shift shaft is driven by an electric motor, **characterized in that** a shoulder (78, 79) adjoins the point of minimum radius on at least one flank (73, 74; 173, 174).

5. A shift device in accordance with claim 1, **characterized in that** the foot part (64) of the shift fork (63) is attached to the lowest point thereof.

6. A shift device in accordance with claim 1, **characterized in that** the shift fork (63) includes an elastic element (65) so that the foot part (64) can move back.

7. A transfer case for motor vehicles having an off-road gear step which can be shifted by the axial displacement of one of its elements (19) by means of a shift fork (63) by rotation of a shaft (48) arranged transversely to the axial direction,
**characterized in that**
a) a cam (50; 150) is fastened to the shaft (48) and has two flanks (73, 74; 173, 174) extending from a minimum to a maximum radius and a flattened portion (75; 175) at the maximum radius;
b) the shift fork (63) has a foot part (64), on which two lantern wheels cooperating with the cam (50; 150) are arranged at a fixed spacing (70; 170) from one another;
c) so that the one lantern wheel (60; 160) contacts the one flank (73; 173) and the other lantern wheel (61; 161) contacts the other flank (74; 174) and, in at least one extreme position, one lantern wheel (60, 61; 160, 161) contacts the flattened portion (75; 175).

8. A transfer case in accordance with claim 7, **characterized in that** the shift fork (63) is a two-armed lever pivotable about an axis (62) which is fixed with respect to the housing, and the lantern wheels (60, 61) are circular cylinders whose axes (71) are parallel to the axis (72) of the shaft (48).

9. A transfer case in accordance with claim 8, **characterized in that** the flanks (73, 74; 173, 174) of the cam (50; 150) are envelope curves of the lantern wheels (60, 61; 160, 161) on a common rolling movement of the cam and lantern wheels.

10. A transfer case in accordance with claim 7, wherein the shift shaft is driven by an electric motor, **characterized in that** a shoulder (78, 79) is provided at the point of minimum radius on at least one flank (73, 74; 173, 174).

11. A transfer case in accordance with claim 7, **characterized in that** the foot part (64) of the shift fork (63) is attached to the lowest point thereof.

12. A transfer case in accordance with claim 7, **characterized in that** the shift fork (63) includes an elastic element (65) so that the foot part (64) can move back.

## Revendications

1. Dispositif de commutation pour une boîte de vitesse, constitué par un manchon de commutation (19) déplaçable en direction d'un arbre de transmission pour relier en entraînement des éléments de transmission, par une fourchette de commutation (63) s'engageant dans le manchon de commutation et par un élément servant d'actionneur, monté rotatif sur un arbre (48) agencé transversalement à l'arbre de transmission et coopérant avec une partie d'embase (64) de la fourchette de commutation, **caractérisé en ce que**
a) l'élément rotatif est une came (50, 50' ; 150) qui a deux flancs (73, 74 ; 173, 174) allant d'un rayon minimum à un rayon maximum et un aplatissement (75 ; 175) au niveau du rayon maximum,
b) il est prévu sur la partie d'embase (64) de la fourchette de commutation (63) deux fuseaux (60, 61 ; 160, 161) à une distance (70 ; 170) fixe l'un de l'autre et coopérant avec la came (50 ; 150),
c) de sorte qu'un fuseau (60 ; 160) est en appui sur un flanc (73, 173) et l'autre fuseau (61 ; 161) est en appui sur l'autre flanc (74, 174), et dans au moins une position extrême, un fuseau (60, 160 ; 61, 161) est en appui sur l'aplatissement (75 ; 175).

2. Dispositif de commutation selon la revendication 1, **caractérisé en ce que** la fourchette de commutation (63) est un levier à deux bras pivotant autour d'un axe (62) solidaire du boîtier, et les fuseaux (60, 61) sont des cylindres circulaires dont les axes (71) sont parallèles à l'axe (72) de l'arbre de transmission.

3. Dispositif de commutation selon la revendication 2, **caractérisé en ce que** les flancs (73, 74 ; 173, 174) de la came (50 ; 150) sont des enveloppantes des fuseaux (60, 160 ; 61, 161) lors du mouvement de roulement des cames et des fuseaux.

4. Dispositif de commutation selon la revendication 1, dans lequel l'arbre de transmission est entraîné par un moteur électrique, **caractérisé en ce qu'**un épaulement (78, 79) se raccorde à au moins un flanc (73, 74 ; 173, 174), à l'emplacement de rayon minimum.

5. Dispositif de commutation selon la revendication 1, **caractérisé en ce que** la partie d'embase (64) de la fourchette de commutation (63) est prévue au point le plus bas.

6. Dispositif de commutation selon la revendication 1, **caractérisé en ce que** la fourchette de commutation (63) contient un élément élastique (65) de sorte que la partie d'embase (64) peut s'effacer.

7. Boîte de transfert pour véhicule automobiles avec une vitesse tout terrain qui peut être commutée par déplacement axial d'un de ses éléments (19) au moyen d'une fourchette de commutation (63) par rotation d'un arbre (48) agencé transversalement à la direction d'axe,
**caractérisée en ce que**
a) sur l'arbre (48) est fixée une came (50 ; 150) qui a deux flancs (73, 74 ; 173, 174) allant d'un rayon minimum à un rayon maximum et un aplatissement (75 ; 175) au niveau du rayon maximum,
b) la fourchette de commutation (63) a une partie d'embase (64) sur laquelle sont agencés deux fuseaux (60, 61 ; 160, 161) à une distance (70 ; 170) fixe l'un de l'autre et coopérant avec la came (50 ; 150),
c) de sorte qu'un fuseau (60 ; 160) est en appui sur un flanc (73, 173) et l'autre fuseau (61 ; 161) est en appui sur l'autre flanc (74, 174), et dans au moins une position extrême, un fuseau (60, 160 ; 61, 161) est en appui sur l'aplatissement (75 ; 175).

8. Boîte de transfert selon la revendication 7, **caractérisée en ce que** la fourchette de commutation (63) est un levier à deux bras pivotant autour d'un axe (62) solidaire du boîtier, et les fuseaux (60, 61) sont des cylindres circulaires dont les axes (71) sont parallèles à l'axe (72) de l'arbre (48).

9. Boîte de transfert selon la revendication 8, **caractérisée en ce que** les flancs (73, 74 ; 173, 174) de la came (50 ; 150) sont des enveloppantes des fuseaux (60, 160 ; 61, 161) lors du mouvement de roulement commun des cames et des fuseaux.

10. Dispositif de commutation selon la revendication 7, dans lequel l'arbre de transmission est entraîné par un moteur électrique, **caractérisé en ce qu'**un épaulement (78, 79) est prévu sur au moins un flanc (73, 74 ; 173, 174), à l'emplacement de rayon minimum.

11. Dispositif de commutation selon la revendication 7, **caractérisé en ce que** la partie d'embase (64) de la fourchette de commutation (63) est prévue au point le plus bas.

12. Dispositif de commutation selon la revendication 7, **caractérisé en ce que** la fourchette de commutation (63) contient un élément élastique (65) de sorte que la partie d'embase (64) peut s'effacer.
